# EUROPEAN PATENT APPLICATION

(11) **EP 3 306 852 A1**
(43) Date of publication of application: **11.04.2018**
(21) Application number: 16802322.4
(22) Date of filing: 20.01.2016
(51) Int. Cl.: H04L 7/00, H04W 56/00

(54) **METHOD AND APPARATUS FOR IMPLEMENTING ALTERNATE BMC**

(30) Priority: 05.06.2015 CN 201510306745
(71) Applicant: ZTE Corporation, Shenzhen, Guangdong 518057 (CN)
(72) Inventor: ZHAO, Hongguang, Shenzhen Guangdong 518057 (CN); QU, Yanxia, Shenzhen Guangdong 518057 (CN)
(74) Representative: Regimbeau
(86) International application number: PCT/CN2016/071480
(87) International publication number: WO 2016/192399

(57) **Abstract**

Provided are a method and apparatus for implementing alternate BMC. The method includes: setting a ring network time node and a local priority (Lcalpriority) attribute of the ring network time nod. The ring network time node is located on a ring and has clock communication with the outside of the ring. The setting the Lcalprioritye includes: for a ring network time input node to which a clock is input, setting the Localpriority of an input port to be superior to the Localpriority of an on-ring port; for a ring network time output node from which the clock is output, setting the Localpriority of an output port to be inferior to the Localpriority of the on-ring port; for a ring network bidirectional time node on which time is transmitted bidirectionally, setting the Localpriority of the output port to be equal to the Localpriority of the on-ring port. It can be seen that a concept of the ring network time node is introduced and a standard setting of the LocalPriority attribute of the ring network time node is provided, avoiding ring oscillations of a path selected according to an algorithm caused by an improper configuration and thus reducing a clock loop risk.

## Description

### TECHNICAL FIELD

Embodiments of the present invention relate to precise time synchronization techniques and, in particular, to a method and apparatus for implementing alternate BMC.

### BACKGROUND

As Precision Time Protocol (PTP) is deployed in telecommunication networks on a large scale, PTP has gained more and more attention and has been widely applied to communication networks. Based on the 1588v2 protocol, the International Telecommunication Union (ITU) is customizing a time standard suitable for telecommunication networks. The G.8275.1 protocol is an important standard for time synchronization defined by the ITU.

In the G.8275.1 protocol, a new Best Master Clock (BMC) algorithm, i.e., alternate BMC is defined. The alternate BMC is applied to telecommunication networks. As compared with a standard BMC algorithm defined in the 1588v2 protocol, the Alternate BMC algorithm adjusts rules of a data set comparison algorithm; adds a Localpriority attribute to the data set comparison algorithm; and adds a non-slave clock (noslave) attribute for controlling a time input to a state selection algorithm, i.e., time cannot access noslave ports. Undoubtedly, through these changes, a clock network topology is constructed according to clock superiority and inferiority, which is more reasonable. At the same time, the Localpriority and noslave element are added to greatly enhance the ability to manually intervene in a network topology.

However, new problems occur in the alternate BMC. The Localpriority attribute changes a minimum path selection rule of the original standard BMC algorithm and the manually set local priority is placed prior to the minimum path selection, so that the topology is not formed according to the minimum path. In this way, an improper configuration will cause a clock loop, or when the environment changes, a clock loop will easily be formed. On the other hand, a clock port input rule is manually adjusted through the noslave attribute, so a clock loop will easily be formed when the environment changes. Therefore, application of the added Localpriority and noslave element to a ring network will bring a potential clock loop risk. Most of existing clock networks are ring networks. To solve the clock loop risk, a user should carefully consider and analyze networking during a configuration. Specifically, the user should consider feasibility of the networking and specify a detailed networking configuration of each apparatus, not like the original BMC algorithm where only two input nodes are configured and other apparatuses conform to default configurations. This undoubtedly increases operation and maintenance costs during a deployment.

### SUMMARY

The following is a summary of a subject matter described herein in detail. This summary is not intended to limit the scope of the claims.

Embodiments of the present invention aim to provide a method and apparatus for implementing alternate Best Master Clock (BMC) to reduce a clock loop risk. To achieve this, embodiments of the present invention provide a method for implementing alternate BMC.

The method includes setting a node that is located on a ring and has clock communication with the outside of the ring as a ring network time node, and setting a local priority (Localpriority) attribute of the ring network time node. The Localpriority attribute is set in the following manner.

For a ring network time input node to which a clock is input, the Localpriority of an input port of the ring network time input node is set to be superior to the Localpriority of an on-ring port of the ring network time input node.

For a ring network time output node from which a clock is output, the Localpriority of an output port of the ring network time output node is set to be inferior to the Localpriority of an on-ring port of the ring network time output node.

For a ring network bidirectional time node on which time is transmitted bidirectionally, the Localpriority of an output port of the ring network bidirectional time node is set to be equal to the Localpriority of an on-ring port of the ring network bidirectional time node.

The method further includes the following step after the ring network time node decides to enter a slave clock (slave) state:
broadcasting, by the ring network time node, apparatus information of the ring network time node during a preset waiting time for enterring the slave state.

Optionally, the waiting time is a product of an interval time between announce messages and a number of hops away from a GrandMaster clock (GM) by default.

Optionally, the waiting time is a preset value.

Optionally, the apparatus information broadcasted is time information of a ring network time node served as the GM.

Optionally, the method further includes: switching the state of the ring network time node to a normal slave state when the waiting time is elapsed, and then announcing real information of the GM to the outside according to a standard protocol.

Optionally, the following step in included before implementing the method: determining whether the node is the ring network time node that is located on the ring and has clock communication with the outside of the ring.

Optionally, the node has a non-slave clock (noslave) port, and the method further includes:
selecting, by all nodes including the ring network time node, a best time source (Ebest) according to a preset state selection policy, and determining, by the all nodes including the ring network time node, a state of all the ports.

Optionally, the state selection policy includes:
traversing, by the node, all time ports that have no noslave attribute, and selecting, by the node, a best Erbest as the Ebest of the node according to a data set comparison algorithm.

Optionally, the state of all ports is determined in the following manner.

When a clockclass value of a local clock D0 of the node is between 1 and 127, if the Erbest of the noslave port is superior to the local clock D0, the noslave port of the node enters a passive state; otherwise, the noslave port of the node enters a master state.

When the clockclass value of the local clock D0 of the node is not between 1 and 127, if the Erbest of the noslave port is superior to the local clock D0 and is superior to the Ebest of the node, the noslave port of the node enters the passive state; otherwise, the noslave port of the node enters the master state;

A port state of the non-noslave port is determined according to a standard algorithm rule.

Embodiments of the present invention further provide an apparatus for implementing alternate Best Master Clock (BMC). The apparatus includes at least a determination unit and a setting unit.

The determination unit is configured to determine whether a node where the apparatus is located is a ring network time node, and the ring network time node is located on a ring and has clock communication with the outside of the ring.

The setting unit is configured to set a local priority (Localpriority) attribute of the ring network time node in the following manner. For a ring network time input node, the Localpriority of an input port of the ring network time input node is set to be superior to the Localpriority of an on-ring port of the ring network time input node. For a ring network time output node, the Localpriority of an output port of the ring network time output node is set to be inferior to the Localpriority of an on-ring port of the ring network time output node. For a ring network bidirectional time node, the Localpriority of an output port of the ring network bidirectional time node is set to be equal to the Localpriority of an on-ring port of the ring network bidirectional time node.

Optionally, the apparatus further includes a first processing unit. The first processing unit is configured to, after the ring network time node where the apparatus is located decides to enter a slave clock (slave) state, broadcast apparatus information of the ring network time node during a preset waiting time required for entering the slave state.

Optionally, the first processing unit is further configured to switch the state of the ring network time node where the apparatus is located to a normal slave state when the waiting time is elapsed, and then to announce real information of the GM to the outside according to a standard protocol.

Optionally, the determination unit is further configured to determine whether the node where the apparatus is located has a noslave port.

Optionally, the apparatus further includes a second processing unit. The second processing unit is configured to select a best time source (Ebest) according to a preset state selection policy, and to determine a state of all ports.

Optionally, the second processing unit is specifically configured to perform the following steps.

The node where apparatus is located traverses all time ports that have no noslave attribute, and selects a best Erbest as the Ebest of the node according to a data set comparison algorithm.

When a clockclass value of a local clock D0 of the node where the apparatus is located is between 1 and 127, if the Erbest of the noslave port is superior to the local clock D0, the noslave port of the node where the apparatus is located enters a passive state; otherwise, the noslave port of the node where the apparatus is located enters a master state.

When the clockclass value of the local clock D0 of the node where the apparatus is located is not between 1 and 127, if the Erbest of the noslave port is superior to the local clock D0 and is superior to the Ebest of the node where the apparatus is located, the noslave port of the node where the apparatus is located enters the passive state; otherwise, the noslave port of the node where the apparatus is located enters the master state.

A port state of the non-noslave port of the node where the apparatus is located is determined according to a standard algorithm rule.

Optionally, the apparatus further includes a third processing unit when the determination unit determines that the node where the apparatus is located is the ring network time node.

Accordingly, the third processing unit is configured to switch the slave state according to an algorithm flow of a standard protocol.

Embodiments of the present disclosure further provide a computer-readable storage medium storing computer-executable instructions. The computer-executable instructions are used for executing any method for implementing alternate Best Master Clock (BMC) described above.

As compared with the related art, the embodiments of the present invention include setting a node that is located on a ring and has clock communication with the outside of the ring as a ring network time node, and setting a Localpriority attribute of the ring network time node. The Localpriority attribute is set in the following manner: for a ring network time input node, the Localpriority of an input port of the ring network time input node is set to be superior to the Localpriority of an on-ring port of the ring network time input node; for a ring network time output node, the Localpriority of an output port of the ring network time output node is set to be inferior to the Localpriority of an on-ring port of the ring network time output node; and for a ring network bidirectional time node, the Localpriority of an output port of the ring network bidirectional time node is set to be equal to the Localpriority of an on-ring port of the ring network bidirectional time node. It can be seen from the provided embodiment that a concept of the ring network time node is introduced and a standard configuration of the LocalPriority attribute of the ring network time node is provided, avoiding ring oscillations of a path selected according to an algorithm caused by an improper configuration and thus reducing a clock loop risk.

Furthermore, after the ring network time node decides to enter a slave clock (slave) state, the ring network time node broadcasts apparatus information of the ring network time node during a preset waiting time required for entering the slave state. If the ring network time node has a noslave port, the ring network time node selects a best time source (Ebest) according to a preset state selection policy and determines a port state. The state selection policy is implemented in the following manner: the noslave port traverses all time ports that have no noslave attribute, and selects a best Erbest as the Ebest of the noslave port according to a data set comparison algorithm. In this way, through time information of the ring network time node, a time delay filtering process is added to filter out invalid time information to be transmitted due to the setting of Localpriority on the network, eliminating a loop of the invalid time information caused by disappearance of external time input.

Other features and advantages of embodiments of the present invention will be elaborated hereinafter in the Description, and moreover, partially become apparent from the Description, or will be understood through implementation of the present invention. The object and other advantages of embodiments of the present invention may be achieved and obtained through structures set forth in the Description, Claims and Drawings.

Other aspects can be understood after the accompanying drawings and detailed description are read and understood.

### BRIEF DESCRIPTION OF DRAWINGS

The accompanying drawings described herein are used to provide a further understanding of the present invention, and form a part of the present application. The schematic embodiments and descriptions thereof of the present invention are used to explain the present invention, and do not form improper limits to the present invention. In the accompanying drawings:
FIG. 1 is a flowchart of a method for implementing alternate BMC according to an embodiment of the present invention;
FIG. 2 is a schematic diagram illustrating a network structure for implementing a ring network time node according to a first embodiment of the present invention;
FIG. 3 is a schematic diagram illustrating a network structure for implementing a ring network time node according to a second embodiment of the present invention;
FIG. 4 is a schematic diagram illustrating a network structure for implementing a ring network time node according to a third embodiment of the present invention; and
FIG. 5 is a structure diagram of an apparatus for implementing alternate BMC according to an embodiment of the present invention.

### DETAILED DESCRIPTION

To facilitate a better understanding by those skilled in the art, embodiments of the present invention will be further described below with reference to the accompanying drawings. The embodiments described below are not intended to limit the present invention. If not in collision, the embodiments described herein and the various methods in the embodiments may be combined with each other.

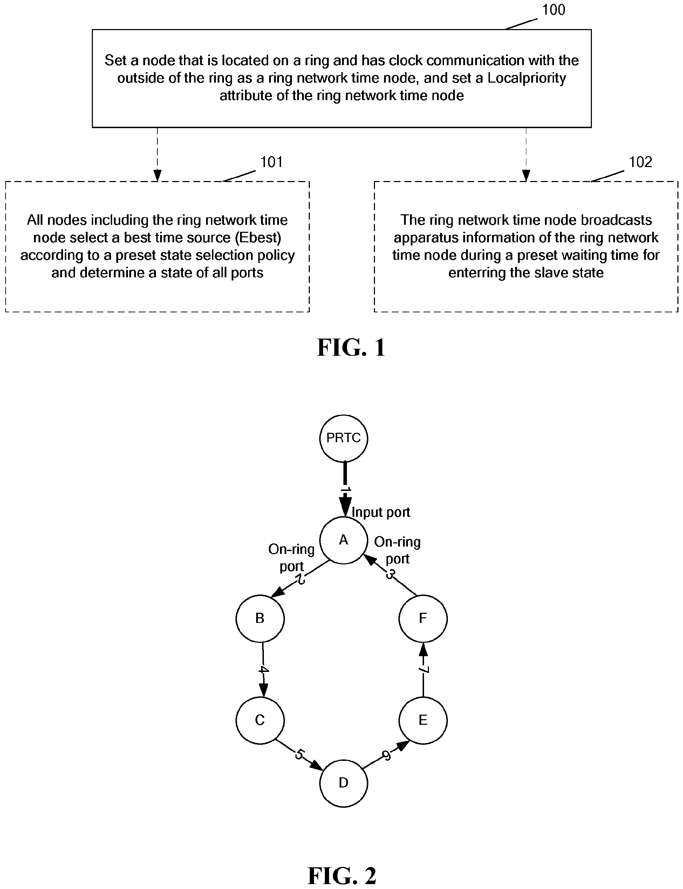

FIG. 1 is a flowchart of a method for implementing alternate BMC according to an embodiment of the present invention. As illustrated in FIG. 1, the method includes the following step:

In step 100, a node that is located on a ring and has clock communication with the outside of the ring is set as a ring network time node, and a Localpriority attribute of the ring network time node is set.

There are three types of ring network time node.

One type of ring network time node is configured to receive a clock, i.e., a clock is obtained from the outside through the ring network time node. This type of ring network time node is called as a ring network time input node.

Another type of ring network time node is configured to output a clock to the outside. This type of ring network time node is called as a ring network time output node.

Yet another type of ring network time node is a ring network bidirectional time node. As for the ring network bidirectional time node, time may be transmitted bidirectionally when status is equal inside the ring and outside of the ring.

There may be multiple ring network time nodes in the ring.

In this step, the Localpriority attribute of the ring network time node is set in the following manner.

For the ring network time input node, the Localpriority of an input port of the ring network time input node is set to be superior to (e.g., has a less value) the Localpriority of an on-ring port of the ring network time input node.

As illustrated in FIG. 2, assuming that the network structure adopts one standard time source (PRTC) to supply time to one ring, then node A is a ring network time input node. A time port through which the node A is connected to the PRTC is an input port, and ports connected to node B or node F are on-ring ports respectively. The value of Localpriority of the input port of the node A is required to be set to be less than that of the on-ring ports of the node A.

For the ring network time output node, the Localpriority of an output port of the ring network time output node is set to be inferior to (e.g., has a greater value) the Localpriority of an on-ring port of the ring network time output node.

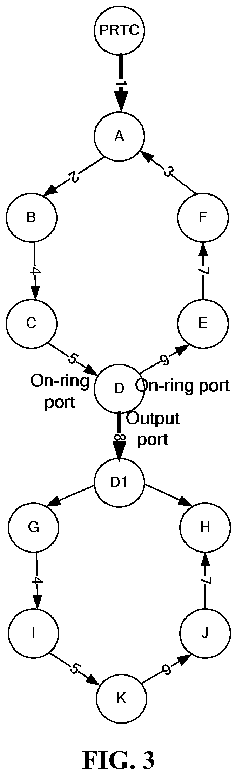

As illustrated in FIG. 3, assuming that the network structure adopts one PRTC to supply time to two rings connected in series, then node D is a ring network time output node. The node D obtains time from the ring and transmits time to the downstream ring. A time port through which the node D is connected to the node D1 an output port, and ports connected to node C or node E are on-ring port respectively. The value of Localpriority of the output port of the node D is required to be set to be greater than that of the on-ring ports of the node D.

For the ring network bidirectional time node, the Localpriority of an output port of the ring network bidirectional time node is set to be equal to (e.g., has a greater value) the Localpriority of an on-ring port of the ring network bidirectional time node.

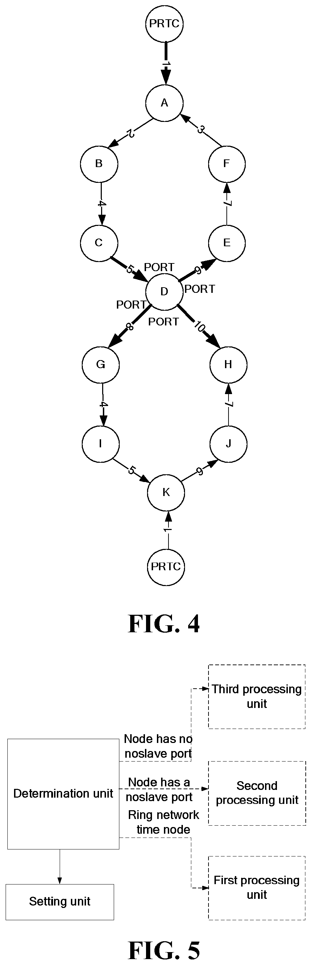

As illustrated in FIG. 4, assuming that the network structure adopts two PRTCs to supply time to two rings connected in series in an active-standby mode, node D is a ring network bidirectional time node for the following reason: at one moment, the node D obtains time from one of the rings and announces time to the other ring; while, at another moment, the node D is required to and has a capability to obtain time from the other ring. Values of Localpriority of four time ports of the node D are required to be set to be equal to each other.

It can be seen from the embodiments of the present invention that a concept of the ring network time node is introduced, and the LocalPriority attribute of the ring network time node is set accordingly and a standard setting is specified, avoiding ring oscillations of a path selected according to an algorithm caused by an improper setting and thus reducing a clock loop risk.

Before implementing the method provided by embodiments of the present invention, it is required to determine whether the node is the ring network time node that is located on the ring and has clock communication with the outside of the ring.

If it is determined that the node is not the ring network time node, the method further includes: switching the slave state according to an algorithm flow of a standard protocol.

If the node has a noslave port, the method further includes the following step:
In step 101, all nodes including the ring network time node select a best time source (Ebest) according to a preset state selection policy and determine the state of all ports.

The state selection policy includes:
The node traverses all time ports that have no noslave attribute, and selects a best Erbest as the Ebest of the node according to an existing data set comparison algorithm.

Both the Erbest and the Ebest are information defined in an existing protocol. The Erbest refers to the best time source and time information on the port. The Ebest refers to the best time input information on an apparatus. That is, the Ebest is the best of all available Erbest information.

The state of all ports are determined in the following manner:
When a clockclass value of a local clock D0 of the node is between 1 and 127, if the Erbest of the noslave port is superior to the local clock D0, the noslave port of the node enters a passive state; otherwise, the noslave port of the node enters a master state;
When the clockclass value of the local clock D0 of the node is not between 1 and 127, if the Erbest of the noslave port is superior to the local clock D0 and is superior to the Ebest of the node, the noslave port of the node enters the passive state; otherwise, the noslave port of the node enters the master state;
A port state of the non-noslave port is determined according to a standard algorithm rule.

The Ebest of the node is selected as follows: among Erbests except the Erbest of the noslave port, the best one is selected. The specific implementation of how to perform the selection is well-known to those skilled in the art and will not be described herein.

Furthermore, after the ring network time node decides to enter a slave clock (slave) state, the method provided by embodiments of the present invention further includes:
In step 102, the ring network time node broadcasts apparatus information of the ring network time node during a preset waiting time required for entering the slave state.

The ring network time node enters the slave state for the following reason: the ring network time node receives an Announce message from the upstream, compares the message with clock information of the apparatus thereof and finds that the outside is superior to the apparatus itself. The Announce message is carried with information about the ring network time node, including time information for topology calculation and information about the number of hops away from a GrandMaster clock (GM).

In this step, the waiting time is, by default, a product of an interval time between Announce messages and the number of hops away from the GM.

Further, the waiting time may also be a value manually preset by a user.

In this step, the apparatus information broadcasted is time information of a ring network time node served as the GM.

The method provided by embodiments of the present invention further includes the following step when the waiting time is elapsed: switching the state of the ring network time node to a normal slave state, and then announcing real information of the GM to the outside according to a standard protocol.

It should be noted that if the node is not the ring network time node, the method further includes: switching the slave state according to an algorithm flow of a standard protocol.

FIG. 5 is a structure diagram of an apparatus for implementing alternate BMC according to an embodiment of the present invention. As illustrated in FIG. 5, the apparatus includes at least a determination unit and a setting unit.

The determination unit is configured to determine whether a node where the apparatus is located is a ring network time node, and the ring network time node is located on a ring and has clock communication with the outside of the ring.

The setting unit is configured to set a Localpriority attribute of the ring network time node. The Localpriority attribute of the ring network time node is set in the following manner.

For a ring network time input node, the Localpriority of an input port of the ring network time input node is set to be superior to the Localpriority of an on-ring port of the ring network time input node; for a ring network time output node, the Localpriority of an output port of the ring network time output node is set to be inferior to the Localpriority of an on-ring port of the ring network time output node; and for a ring network bidirectional time node, the Localpriority of an output port of the ring network bidirectional time node is set to be equal to the Localpriority of an on-ring port of the ring network bidirectional time node.

The apparatus provided by the present invention further includes a first processing unit. The first processing unit is configured to, after the ring network time node where the apparatus is located decides to enter a slave clock (slave) state, broadcast apparatus information of the ring network time node during a preset waiting time required for entering the slave state.

The first processing unit is further configured to switch the state of the ring network time node where the apparatus is located to a normal slave state when the waiting time is elapsed, and then to announce real information of the GM to the outside according to a standard protocol.

When the determination unit determines that the node where the apparatus is located has a noslave port, the apparatus provided by the present invention further includes a second processing unit. The second processing unit is configured to select an Ebest according to a preset state selection policy and to determine the state of all the ports. The second processing unit is specifically configured as follows:
The node where the apparatus is located traverses all time ports that have no noslave attribute, and selects a best Erbest as the Ebest of the node according to an existing data set comparison algorithm;
When a clockclass value of a local clock D0 of the node where the apparatus is located is between 1 and 127, if the Erbest of the noslave port is superior to the local clock D0, the noslave port of the node where the apparatus is located enters a passive state; otherwise, the noslave port of the node where the apparatus is located enters a master state;
When the clockclass value of the local clock D0 of the node where the apparatus is located is not between 1 and 127, if the Erbest of the noslave port is superior to the local clock D0 and is superior to the Ebest of the node where the apparatus is located, the noslave port of the node where the apparatus is located enters the passive state; otherwise, the noslave port of the node where the apparatus is located enters the master state;
A port state of the non-noslave port of the node where the apparatus is located is determined according to a standard algorithm rule.

When the determination unit determines that the node where the apparatus is located is not the ring network time node, the apparatus further includes a third processing unit accordingly. The third processing unit is configured to switch the slave state according to an algorithm flow of a standard protocol.

The apparatus for implementing alternate BMC provided by embodiments of the present invention can be placed in a node of a ring network.

The above are only preferred embodiments of the present invention and are not intended to limit the present invention. Any modifications, equivalent substitutions, improvements and the like made within the spirit and principle of the present invention are within the scope of the present invention.

### INDUSTRIAL APPLICABILITY

Embodiments of the present invention provide a method and apparatus for implementing alternate BMC. The method includes setting a node that is located on a ring and has clock communication with the outside of the ring as a ring network time node, and setting a local priority (Localpriority) attribute of the ring network time node. The Localpriority attribute is set in the following manners: for a ring network time input node, the Localpriority of an input port of the ring network time input node is set to be superior to the Localpriority of an on-ring port of the ring network time input node; for a ring network time output node, the Localpriority of an output port of the ring network time output node is set to be inferior to the Localpriority of an on-ring port of the ring network time output node; and for a ring network bidirectional time node, the Localpriority of an output port of the ring network bidirectional time node is set to be equal to the Localpriority of an on-ring port of the ring network bidirectional time node. It can be seen from the embodiments of the present invention that a concept of the ring network time node is introduced and a standard setting of the LocalPriority attribute of the ring network time node is provided, avoiding ring oscillations of a path selected according to an algorithm caused by an improper setting and thus reducing a clock loop risk.

## Claims

1. A method for implementing alternate Best Master Clock (BMC), comprising:
setting a node as a ring network time node, and setting a local priority (Lcalpriority) attribute of the ring network time node, wherein the ring network time node is located on a ring and has clock communication with the outside of the ring,
wherein the setting a local priority (Lcalpriority) attribute of the ring network time node comprises:
for a ring network time input node to which a clock is received, setting the Localpriority of an input port of the ring network time input node to be superior to the Localpriority of an on-ring port of the ring network time input node;
for a ring network time output node from which the clock is output, setting the Localpriority of an output port of the ring network time output node to be inferior to the Localpriority of the on-ring port of the ring network time output node; and
for a ring network bidirectional time node on which time is transmitted bidirectionally, setting the Localpriority of the output port of the ring network bidirectional time node to be equal to the Localpriority of the on-ring port of the ring network bidirectional time node.

2. The method according to claim 1, wherein the method further comprises the following step after the ring network time node decides to enter a slave clock (slave) state:
broadcasting, by the ring network time node, apparatus information of the ring network time node during a preset waiting time required for entering the slave state.

3. The method according to claim 2, wherein the waiting time is a product of an interval time between announce messages and a total number of hops away from a GrandMaster clock (GM) by default; or
the waiting time is a preset value.

4. The method according to claim 2, wherein the apparatus information broadcasted is time information of a ring network time node served as a GrandMaster clock (GM).

5. The method according to any one of claims 2 to 4, wherein the method further comprises the following steps when the waiting time is elapsed: switching the state of the ring network time node to a normal slave state, and then announcing real information of the GM to the outside according to a standard protocol.

6. The method according to claim 1, wherein the method further comprises the following step before the method: determining whether the node is the ring network time node that is located on the ring and has clock communication with the outside of the ring.

7. The method according to claim 6, wherein the node has a non-slave clock (noslave) port, and the method further comprises:
selecting, by all nodes including the ring network time node, a best time source (Ebest) according to a preset state selection policy, and determining, by the all nodes including the ring network time node, a state of all ports.

8. The method according to claim 7, wherein the state selection policy comprises:
traversing, by the node, all time ports that have no noslave attribute, and selecting, by the node, a best Erbest as the Ebest of the node according to a data set comparison algorithm.

9. The method according to claim 7, wherein the determining, by the all nodes including the ring network time node, a state of all ports comprises:
when a clockclass value of a local clock D0 of the node is between 1 and 127, if the Erbest of the noslave port is superior to the local clock D0, the noslave port of the node enters a passive state; otherwise, the noslave port of the node enters a master state;
when the clockclass value of the local clock D0 of the node is not between 1 and 127, if the Erbest of the noslave port is superior to the local clock D0 and is superior to the Ebest of the node, the noslave port of the node enters the passive state; otherwise, the noslave port of the node enters the master state; and
a port state of the non-noslave port is determined according to a standard algorithm rule.

10. An apparatus for implementing alternate Best Master Clock (BMC), comprising at least a determination unit and a setting unit, wherein
the determination unit is configured to determine whether a node where the apparatus is located is a ring network time node, wherein the ring network time node is located on a ring and has clock communication with the outside of the ring; and
the setting unit is configured to set a local priority (Localpriority) attribute of the ring network time node in the following manner: for a ring network time input node, the Localpriority of an input port of the ring network time input node is set to be superior to the Localpriority of an on-ring port of the ring network time input node; for a ring network time output node, the Localpriority of an output port of the ring network time output node is set to be inferior to the Localpriority of an on-ring port of the ring network time output node; and for a ring network bidirectional time node, the Localpriority of an output port of the ring network bidirectional time node is set to be equal to the Localpriority of an on-ring port of the ring network bidirectional time node.

11. The apparatus according to claim 10, further comprising a first processing unit, wherein the first processing unit is configured to, after the ring network time node where the apparatus is located decides to enter a slave clock (slave) state, broadcast apparatus information of the ring network time node during a preset waiting time required for entering the slave state.

12. The apparatus according to claim 11, wherein the first processing unit is further configured to switch the state of the ring network time node where the apparatus is located to a normal slave state when the waiting time is elapsed, and then to announce real information of a GrandMaster clock (GM) to the outside according to a standard protocol.

13. The apparatus according to claim 10, wherein the determination unit is further configured to determine whether the node where the apparatus is located has a noslave port; and
the apparatus further comprises a second processing unit, wherein the second processing unit is configured to select a best time source (Ebest) according to a preset state selection policy and determine a state of all ports.

14. The apparatus according to claim 13, wherein the second processing unit is further configured to perform the following steps:
the node where the apparatus is located traverses all time ports that have no noslave attribute, and selects a best Erbest as the Ebest of the node according to a data set comparison algorithm;
when a clockclass value of a local clock D0 of the node where the apparatus is located is between 1 and 127, if the Erbest of the noslave port is superior to the local clock D0, the noslave port of the node where the apparatus is located enters a passive state; otherwise, the noslave port of the node where the apparatus is located enters a master state;
when the clockclass value of the local clock D0 of the node where the apparatus is located is not between 1 and 127, if the Erbest of the noslave port is superior to the local clock D0 and is superior to the Ebest of the node where the apparatus is located, the noslave port of the node where the apparatus is located enters the passive state; otherwise, the noslave port of the node where the apparatus is located enters the master state; and
a port state of the non-noslave port of the node where the apparatus is located is determined according to a standard algorithm rule.

15. The apparatus according to claim 10, wherein the apparatus further comprises a third processing unit when the determination unit determines that the node where the apparatus is located is the ring network time node;
wherein the third processing unit is configured to switch a slave state according to an algorithm flow of a standard protocol.

16. A computer-readable storage medium storing computer-executable instructions, wherein the computer-executable instructions are used for executing the method for implementing alternate Best Master Clock (BMC) according to any one of claims 1 to 9.
